# EUROPEAN PATENT APPLICATION

(11) **EP 4 160 354 A2**
(43) Date of publication of application: **05.04.2023**
(21) Application number: 22198986.6
(22) Date of filing: 30.09.2022
(51) Int. Cl.: G06F 1/20, G06F 1/3234, G06F 1/324, G06F 1/3296

(54) **APPARATUS AND METHOD WITH LARGE-SCALE COMPUTING**

(30) Priority: 01.10.2021 KR 20210131072; 22.12.2021 KR 20210185382
(71) Applicant: Samsung Electronics Co., Ltd., Suwon-si 16677 (KR); Seoul National University R & DB Foundation, Seoul 08826 (KR)
(72) Inventor: KWON, Hyung-Dal, 16678 Suwon-si (KR); LEE, Jaejin, 08826 Seoul (KR); KIM, Jinpyo, 08826 Seoul (KR); BANG, Byungwoo, 16678 Suwon-si (KR); KIM, Heehon, 08826 Seoul (KR); PARK, Daeyoung, 08826 Seoul (KR); SON, Sunghoon, 16678 Suwon-si (KR); LEE, Seung Wook, 16678 Suwon-si (KR); CHANG, Wooseok, 16678 Suwon-si (KR); JUNG, Wookeun, 08826 Seoul (KR); JUNG, Jae Hoon, 08826 Seoul (KR); JO, Jae-Eon, 16678 Suwon-si (KR)
(74) Representative: Arnold & Siedsma

(57) **Abstract**

A computing method and device for large-scale computing is provided. The computing device includes at least one processing device configured to perform an operation related to a neural network, a sensor configured to sense an electrical characteristic of the at least one processing device, an operating frequency of the at least one processing device, and a temperature of the at least one processing device, and a processor configured to calculate a workload to be allocated to the at least one processing device based on an operating mode of the at least one processing device, the electrical characteristic of the at least one processing device, the operating frequency of the at least one processing device, and the temperature of the at least one processing device, and control the electrical characteristic, the operating frequency, and the temperature based on the operating mode and the workload.

## Description

### BACKGROUND

### 1. Field

The following description relates to an apparatus and method with large-scale computing.

### 2. Description of Related Art

Dynamic voltage and frequency scaling (DVFS) technology may be implemented to adjust a voltage and a frequency of a computing system.

The DVFS is a technique that may be implemented in computer architecture, and may refer to a technique to control performance and power by dynamically increasing or decreasing an applied voltage of an implemented component and adjusting a core frequency.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In a general aspect, a computing device includes at least one processing device configured to perform an operation of a neural network; a sensor configured to sense at least one of an electrical characteristic of the at least one processing device, an operating frequency of the at least one processing device, and a temperature of the at least one processing device; and a processor configured to calculate a workload to be allocated to the at least one processing device based on an operating mode of the at least one processing device, the sensed electrical characteristic of the at least one processing device, the sensed operating frequency of the at least one processing device, and the sensed temperature of the at least one processing device, and control the electrical characteristic, the operating frequency, and the temperature based on the operating mode and the calculated workload.

A typical DVFS technology may not reflect characteristics of each of the plurality of hardware chips of the computing system (e.g., graphics processing unit (GPU) and central processing unit (CPU)), and may not consider a temperature of the hardware chips. Also, in HPC for example, the adjustment of the applied voltage and frequency is usually applied to all processors at once, instead of applying a unique voltage and frequency to each processor. Moreover, typical DVFS technology rare applies reinforcement learning to automatically find optimal conditions.

By adjusting the voltages and frequencies applied to the hardware chips of the computing system, a computing device may achieve a higher performance, reduce power consumption, and achieve a higher energy efficiency when compared to applications in previous apparatuses.

Preferably the sensor includes an element configured to measure the electrical characteristics, and wherein the electrical characteristic comprises at least one of a voltage applied to the at least one processing device and power consumption of the at least one processing device.

Preferably the sensor includes a temperature sensor configured to measure the temperature.

Preferably the electrical characteristic includes at least one of a voltage applied to the at least one processing device and power consumption of the at least one processing device.

Preferably the operating mode includes at least one of a high-performance mode and a high-efficiency mode.

Preferably the processor is configured to, in response to the operating mode being a high-performance mode, allocate a workload with a large number of computational operations to a processing device among the at least one processing device that uses a small amount of power.

Preferably the processor is configured to, in response to the operating mode being a high-performance mode allocate a workload with a small number of computational operations to a processing device among the at least one processing device that uses a large amount of power; and control the electrical characteristic and the operating frequency such that the processing device that uses the large amount of power has an electrical characteristic and an operating frequency that corresponds to a peak efficiency.

Preferably the processor is configured to, in response to the operating mode being a high-efficiency mode, allocate a workload with a large number of computational operations to a processing device among the at least one processing device to be driven with a low voltage at a same operating frequency.

Preferably the processor is configured to control the operating frequency of the at least one processing device and an operating frequency of a memory based on an arithmetic intensity (AI) of an operation to be performed in the at least one processing device.

Preferably the processor is configured to increase the operating frequency of the memory in response to the operating frequency of the at least one processing device being increased, and to decrease the operating frequency of the memory in response to the operating frequency of the at least one processing device being decreased.

Preferably the processor is configured to decrease the operating frequency of the memory in response to the operating frequency of the at least one processing device being increased, and to increase the operating frequency of the memory in response to the operating frequency of the at least one processing device being decreased.

Preferably the processor is configured to: adjust the sensed electrical characteristic of the at least one processing device and the sensed operating frequency of the at least one processing device based on at least one of a size and a shape of input data input to the at least one processing device; perform reinforcement learning on the neural network using a reward determined based on the adjusted electrical characteristic and the adjusted operating frequency; and control the adjusted electrical characteristic and the adjusted operating frequency based on the neural network on which the reinforcement learning is performed.

In a general aspect, a processor-implemented computing method, includes measuring an electrical characteristic of at least one processing device, an operating frequency of the at least one processing device, and a temperature of the at least one processing device, wherein the at least one processing device is configured to perform an operation related to a neural network; calculating a workload to be allocated to the at least one processing device based on an operating mode of the at least one processing device, the sensed electrical characteristic of the at least one processing device, the sensed operating frequency of the at least one processing device, and the sensed temperature of the at least one processing device; and controlling the electrical characteristic, the operating frequency, and the temperature based on the operating mode and the calculated workload, wherein the measuring, the calculating and the controlling are performed by a processor configured according to instructions executed by the processor.

Preferably the electrical characteristic includes at least one of a voltage applied to the at least one processing device and power consumption of the at least one processing device.

Preferably the operating mode includes at least one of a high-performance mode and a high-efficiency mode.

Preferably the calculating of the workload by the processor includes, in response to the operating mode being a high-performance mode, allocating, by the processor, a workload with a large number of computational operations to an processing device among the at least one processing device that uses a small amount of power.

Preferably the calculating of the workload by the processor includes in response to the operating mode being a high-performance mode, allocating, by the processor, a workload with a small number of computational operations to a processing device among the at least one processing device that uses a large amount of power; and controlling, by the processor, the electrical characteristic and the operating frequency such that the processing device that uses the large amount of power has an electrical characteristic and an operating frequency that corresponds to a peak efficiency.

Preferably the calculating of the workload by the processor includes allocating, in response to the operating mode being a high-efficiency mode, a workload with a large number of computational operations to a processing device among the at least one processing device to be driven with a low voltage at a same operating frequency.

Preferably the method includes controlling, by the processor, the operating frequency of the at least one processing device and an operating frequency of a memory based on an arithmetic intensity (AI) of an operation to be performed in the at least one processing device.

Preferably the controlling of the operating frequency of the at least one processing device and the operating frequency of the memory includes increasing the operating frequency of the memory in response to the operating frequency of the at least one processing device being increased; and decreasing the operating frequency of the memory in response to the operating frequency of the at least one processing device being decreased.

Preferably the controlling of the operating frequency of the at least one processing device and the operating frequency of the memory includes decreasing the operating frequency of the memory in response to the operating frequency of the at least one processing device being increased; and increasing the operating frequency of the memory in response to the operating frequency of the at least one processing device being decreased.

Preferably the method includes adjusting the sensed electrical characteristic of the at least one processing device and the sensed operating frequency of the at least one processing device based on at least one of a size and a shape of input data input to the processing device; performing reinforcement learning on the neural network using a reward determined based on the adjusted electrical characteristic and the adjusted operating frequency; and controlling the adjusted electrical characteristic and the adjusted operating frequency based on the neural network on which the reinforcement learning is performed.

In a general aspect, a device includes a processor configured to execute instructions; and a memory, storing instructions, which, when executed by the processor, configures the processor to: determine an operating mode of at least one processing device; sense a voltage, an operating frequency, and a temperature of the at least one processing device; and calculate a workload to be allocated to the at least one processing device based on the determined operating mode; wherein in a first determined operating mode, the processor is configured to allocate a workload that is greater than a predetermined workload threshold to a processing device among the at least one processing device that has a low power consumption rate, and allocate a workload that is less than the predetermined workload threshold to a processing device among the at least one processing device that has a high power consumption rate; and wherein in a second determined operating mode, the processor is configured to allocate the workload that is greater than the predetermined workload threshold to a processing device among the at least one processing device that is driven with a low voltage.

Preferably the first determined mode is a high-performance mode, and the second determined mode is a high-efficiency mode.

Preferably the processor is configured to decrease an operating frequency of the memory in response to the operating frequency of the at least one processing device being increased.

Additional features of the computing device embodiments, method embodiments and device embodiments are defined by the following set of clauses:
1. A computing device, comprising:
   at least one processing device configured to perform an operation of a neural network;
   a sensor configured to sense at least one of an electrical characteristic of the at least one processing device, an operating frequency of the at least one processing device, and a temperature of the at least one processing device; and
   a processor configured to calculate a workload to be allocated to the at least one processing device based on an operating mode of the at least one processing device, the sensed electrical characteristic of the at least one processing device, the sensed operating frequency of the at least one processing device, and the sensed temperature of the at least one processing device, and control the electrical characteristic, the operating frequency, and the temperature based on the operating mode and the calculated workload.
2. The device of clause 1, wherein the sensor comprises an element configured to measure the electrical characteristics, and wherein the electrical characteristic comprises at least one of a voltage applied to the at least one processing device and power consumption of the at least one processing device.
3. The device of clause 2, wherein the sensor comprises a temperature sensor configured to measure the temperature.
4. The device of clause 1, wherein the operating mode comprises at least one of a high-performance mode and/or a high-efficiency mode.
5. The device of clause 1, wherein, the processor is configured to, in response to the operating mode being a high-performance mode, allocate a workload with a large number of computational operations to a processing device among the at least one processing device that uses a small amount of power.
6. The device of clause 1, wherein, the processor is configured to, in response to the operating mode being a high-performance mode
   allocate a workload with a small number of computational operations to a processing device among the at least one processing device that uses a large amount of power; and
   control the electrical characteristic and the operating frequency such that the processing device that uses the large amount of power has an electrical characteristic and an operating frequency that corresponds to a peak efficiency.
7. The device of clause 1, wherein, the processor is configured to, in response to the operating mode being a high-efficiency mode, allocate a workload with a large number of computational operations to a processing device among the at least one processing device to be driven with a low voltage at a same operating frequency.
8. The device of clause 1, wherein the processor is configured to control the operating frequency of the at least one processing device and an operating frequency of a memory based on an arithmetic intensity (AI) of an operation to be performed in the at least one processing device.
9. The device of clause 8, wherein the processor is configured to increase the operating frequency of the memory in response to the operating frequency of the at least one processing device being increased, and decrease the operating frequency of the memory in response to the operating frequency of the at least one processing device being decreased.
10. The device of clause 8, wherein the processor is configured to decrease the operating frequency of the memory in response to the operating frequency of the at least one processing device being increased, and increase the operating frequency of the memory in response to the operating frequency of the at least one processing device being decreased.
11. The device of clause 1, wherein the processor is configured to:
   adjust the sensed electrical characteristic of the at least one processing device and the sensed operating frequency of the at least one processing device based on at least one of a size and a shape of input data input to the at least one processing device;
   perform reinforcement learning on the neural network using a reward determined based on the adjusted electrical characteristic and the adjusted operating frequency; and
   control the adjusted electrical characteristic and the adjusted operating frequency based on the neural network on which the reinforcement learning is performed.
12. A processor-implemented method, the method comprising:
   measuring an electrical characteristic of at least one processing device, an operating frequency of the at least one processing device, and a temperature of the at least one processing device, wherein the at least one processing device is configured to perform an operation related to a neural network;
   calculating a workload to be allocated to the at least one processing device based on an operating mode of the at least one processing device, the sensed electrical characteristic of the at least one processing device, the sensed operating frequency of the at least one processing device, and the sensed temperature of the at least one processing device; and
   controlling the electrical characteristic, the operating frequency, and the temperature based on the operating mode and the calculated workload,
   wherein the measuring, the calculating and the controlling are performed by a processor configured according to instructions executed by the processor.
13. The method of clause 12, wherein the electrical characteristic comprises at least one of a voltage applied to the at least one processing device and power consumption of the at least one processing device.
14. The method of clause 12, wherein the operating mode comprises at least one of a high-performance mode and a high-efficiency mode.
15. The method of clause 12, wherein the calculating of the workload by the processor comprises, in response to the operating mode being a high-performance mode, allocating, by the processor, a workload with a large number of computational operations to an processing device among the at least one processing device that uses a small amount of power.
16. The method of clause 12, wherein the calculating of the workload by the processor comprises:
   in response to the operating mode being a high-performance mode, allocating, by the processor, a workload with a small number of computational operations to an processing device among the at least one processing device that uses a large amount of power; and
   controlling, by the processor, the electrical characteristic and the operating frequency such that the processing device that uses the large amount of power has an electrical characteristic and an operating frequency that corresponds to a peak efficiency.
17. The method of clause 12, wherein the calculating of the workload by the processor comprises allocating, in response to the operating mode being a high-efficiency mode, a workload with a large number of computational operations to an processing device among the at least one processing device to be driven with a low voltage at a same operating frequency.
18. The method of clause 12, further comprising:
   controlling, by the processor, the operating frequency of the at least one processing device and an operating frequency of a memory based on an arithmetic intensity (AI) of an operation to be performed in the at least one processing device.
19. The method of clause 18, wherein the controlling of the operating frequency of the at least one processing device and the operating frequency of the memory comprises:
   increasing the operating frequency of the memory in response to the operating frequency of the at least one processing device being increased; and
   decreasing the operating frequency of the memory in response to the operating frequency of the at least one processing device being decreased.
20. The method of clause 18, wherein the controlling of the operating frequency of the at least one processing device and the operating frequency of the memory comprises:
   decreasing the operating frequency of the memory in response to the operating frequency of the at least one processing device being increased; and
   increasing the operating frequency of the memory in response to the operating frequency of the at least one processing device being decreased.
21. The method of clause 12, further comprising:
   adjusting the sensed electrical characteristic of the at least one processing device and the sensed operating frequency of the at least one processing device based on at least one of a size and a shape of input data input to the processing device;
   performing reinforcement learning on the neural network using a reward determined based on the adjusted electrical characteristic and the adjusted operating frequency; and
   controlling the adjusted electrical characteristic and the adjusted operating frequency based on the neural network on which the reinforcement learning is performed.
22. A device, comprising:
   a processor configured to execute instructions; and
   a memory, storing instructions, that, when executed by the processor, configures the processor to:
      determine an operating mode of at least one processing device;
      sense a voltage, an operating frequency, and a temperature of the at least one processing device; and
      calculate a workload to be allocated to the at least one processing device based on the determined operating mode;
      wherein in a first determined operating mode, the processor is configured to allocate a workload that is greater than a predetermined workload threshold to a processing device among the at least one processing device that has a low power consumption rate, and allocate a workload that is less than the predetermined workload threshold to n processing device among the at least one processing device that has a high power consumption rate; and
      wherein in a second determined operating mode, the processor is configured to allocate the workload that is greater than the predetermined workload threshold to a processing device among the at least one processing device that is driven with a low voltage.
23. The device of clause 22, wherein the first determined mode is a high-performance mode, and the second determined mode is a high-efficiency mode.
24. The device of clause 22, wherein the processor is configured to decrease an operating frequency of the memory in response to the operating frequency of the at least one processing device being increased.

Other features and aspects will be apparent from the following detailed description, the drawings, and the claims.

### BRIEF DESCRIPTION OF DRAWINGS

FIG. 1 illustrates a block diagram of an example computing device, in accordance with one or more embodiments.
FIG. 2 illustrates an example and method, in accordance with one or more embodiments.
FIG. 3 illustrates a reinforcement learning operation, in accordance with one or more embodiments.
FIG. 4 illustrates a flowchart of an example operation of differently allocating a size of workload according to power efficiency, in accordance with one or more embodiments.
FIG. 5 illustrates an example scheduler that differently allocates a size of workload according to power efficiency, in accordance with one or more embodiments.
FIG. 6 illustrates an operation of searching for determined optimized settings, in accordance with one or more embodiments.
FIG. 7 illustrates a difference in graphics processing unit (GPU) voltage change according to a GPU utilization rate, in accordance with one or more embodiments.
FIG. 8 illustrates an operation performed toward achievement a maximum frequency using a different voltage for each GPU in a maximum performance mode, in accordance with one or more embodiments.
FIG. 9A, FIG. 9B, and FIG. 9C illustrate application examples, in accordance with one or more embodiments.
FIG. 10 is a flowchart illustrating an example method, in accordance with one or more embodiments.

Throughout the drawings and the detailed description, unless otherwise described or provided, the same drawing reference numerals will be understood to refer to the same or like elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known after an understanding of the disclosure of this application may be omitted for increased clarity and conciseness, noting that omissions of features and their descriptions are also not intended to be admissions of their general knowledge.

The features described herein may be embodied in different forms, and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

Although terms such as "first," "second," and "third" may be used herein to describe various members, components, regions, layers, or sections, these members, components, regions, layers, or sections are not to be limited by these terms. Rather, these terms are only used to distinguish one member, component, region, layer, or section from another member, component, region, layer, or section. Thus, a first member, component, region, layer, or section referred to in examples described herein may also be referred to as a second member, component, region, layer, or section without departing from the teachings of the examples.

Throughout the specification, when an element, such as a layer, region, or substrate is described as being "on," "connected to," or "coupled to" another element, it may be directly "on," "connected to," or "coupled to" the other element, or there may be one or more other elements intervening therebetween. In contrast, when an element is described as being "directly on," "directly connected to," or "directly coupled to" another element, there can be no other elements intervening therebetween.

The terminology used herein is for the purpose of describing particular examples only, and is not to be used to limit the disclosure. As used herein, the singular forms "a," "an," and "the" are intended to include the plural forms as well, unless the context clearly indicates otherwise. As used herein, the term "and/or" includes any one and any combination of any two or more of the associated listed items. As used herein, the terms "include," "comprise," and "have" specify the presence of stated features, numbers, operations, elements, components, and/or combinations thereof, but do not preclude the presence or addition of one or more other features, numbers, operations, elements, components, and/or combinations thereof.

In addition, terms such as first, second, A, B, (a), (b), and the like may be used herein to describe components. Each of these terminologies is not used to define an essence, order, or sequence of a corresponding component but used merely to distinguish the corresponding component from other component(s).

Unless otherwise defined, all terms, including technical and scientific terms, used herein have the same meaning as commonly understood by one of ordinary skill in the art to which this disclosure pertains after an understanding of the disclosure of the present application. Terms, such as those defined in commonly used dictionaries in the context of this art, are to be interpreted as having a meaning that is consistent with their meaning in the context of the relevant art and the disclosure of the present application, and are not to be interpreted in an idealized or overly formal sense unless expressly so defined herein.

In the one or more examples, a dynamic voltage and frequency scaling (DVFS) technology may be implemented to improve the performance of computing systems or to reduce power consumption.

In the one or more examples, the computing device is an electronic hardware device that is configured to perform operation(s), and/or may refer to computing hardware (e.g., a processor) configured to execute instructions (e.g., coding) that, when executed by the computing hardware, configure the computing hardware to perform one or more operations and/or methods. Such instructions may be stored in a non-transitory recording medium, for example, that when read and executed by one or more processors or one or more microprocessors, configure the same to perform certain operations or methods.

In other words, the computing device refers to structure, as electronic hardware or computing hardware that performs one or more features of the present disclosure.

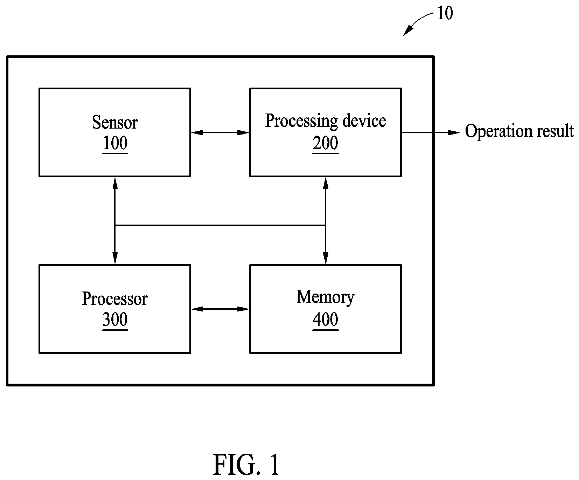

FIG. 1 illustrates a block diagram illustrating an example computing device, in accordance with one or more embodiments.

A typical DVFS technology may not reflect characteristics of each of a plurality of processors, and may not consider a temperature of the processor.

Referring to FIG. 1, a computing device 10 may control a voltage or a frequency utilized for computing, and thereby improves a performance of some high-performance computing devices (HPC), a supercomputer, or a cloud system, or reducing power consumption, and thereby improves a performance in or by the computing device 10.

In an example, the computing device 10 may adjust, in an acceptable range of voltages and frequencies (e.g., an operating frequency) of hardware chips (e.g., graphics processing unit (GPU) and central processing unit (CPU)) performing an operation, voltages and frequencies applied to the hardware chips, thereby reducing power consumption and achieving a maximum performance.

By adjusting the voltages and frequencies applied to the hardware chips, the computing device 10 may achieve a higher performance, reduce power consumption, and achieve a higher energy efficiency when compared to applications of a uniform voltage in previous apparatuses.

As non-limiting examples, the computing device 10 may store unique characteristics of processing devices 200 in a form of a table, and may implement the stored characteristics for achievement toward a maximum performance or the maximum energy efficiency of such computing devices. Herein, it is noted that use of the term 'may' with respect to an example or embodiment, e.g., as to what an example or embodiment may include or implement, means that at least one example or embodiment exists where such a feature is included or implemented while all examples and embodiments are not limited thereto.

The computing device 10 may implement machine learning or other artificial intelligence to achieve a high computing performance or a high energy efficiency. In one or more examples, the machine learning may include reinforcement learning, where the computing device 10 may automatically control the processing devices to receive voltages and frequencies suitable for characteristics of the processing devices based on the implementation of the reinforcement learning, thereby performing the maximizing of performance or the maximizing of energy efficiency.

The reinforcement learning may refer to a learning method, including supervised or unsupervised learning, and reinforcement learning, e.g., with experience or environment-based learning, in which an agent defined in a predetermined environment recognizes a current state, and selects an action or an action order that performs maximizing of a reward from selectable actions.

A node (or neuron) in a neural network may contain a combination of parameters, e.g., weights and biases. A neural network may include one or more layers composed of one or more nodes. A neural network may be trained to infer a desired result from an arbitrary input by changing the weight of a node through learning or training. For example, the weights and biases of a layer structure or between layers may be collectively referred to as connectivity of a neural network. Accordingly, the training of a neural network may denote establishing and training of such weighted connectivities. Briefly, any such reference herein to "neurons" is not intended to impart any relatedness with respect to how the neural network architecture computationally maps or thereby intuitively recognizes or considers information, and how a human's neurons operate. In other words, the term "neuron" is merely a term of art referring to the hardware implemented operations of nodes of an artificial neural network, and will have a same meaning as the node of the neural network.

Technological automation of pattern recognition or analyses, for example, has been implemented through processor implemented neural network models, as specialized computational architectures, that after substantial training may provide computationally intuitive mappings between input patterns and output patterns, pattern recognitions of input patterns, as non-limited examples. The trained capability of generating such mappings or performing such pattern recognitions may be referred to as a learning capability of the neural network. Such trained capabilities may also enable the specialized computational architecture to classify such an input pattern, or portion of the input pattern, as a member that belongs to one or more predetermined groups. Further, because of the specialized training, such specially trained neural network may thereby have a generalization capability of generating a relatively accurate or reliable output with respect to an input pattern that the neural network may not have been trained for, for example.

The neural network may include, as a non-limiting example, a deep neural network having plural hidden layers. In an example, the DNN may be one or more of a fully connected network, a convolution neural network, a recurrent neural network, an attention network, a self-attention network, and the like, or may include different or overlapping neural network portions respectively with such full, convolutional, or recurrent connections, according to an algorithm used to process information.

For example, the neural network may be, or include, as only examples, a convolutional neural network (CNN), a recurrent neural network (RNN), perceptron, feed forward (FF), a radial basis network (RBF), deep feed forward (DFF), a long short term memory (LSTM), a gated recurrent unit (GRU), an autoencoder (AE), a variational autoencoder (VAE), a denoising autoencoder (DAE), a sparse autoencoder (SAE), Markov Chain (MC), a Hopfield network (HN), a Boltzmann machine (BM), a restricted Boltzmann machine (RBM), a Depp belief network (DBN), a deep convolutional network (DCN), a deconvolutional network (DN), a deep convolutional inverse graphics network (DCIGN), a generative adversarial network (GAN), a liquid state machine (LSM), an extreme learning machine (ELM), an echo state network (ESN), a deep residual network (DRN), a differentiable neural computer (DNC), a neural turning machine (NTM), a capsule network (CN), a Kohonen network (KN), and an attention network (AN), as non-limiting examples.

The computing device 10 may include a sensor 100, the processing device 200, one or more processors 300, and one or more memories 400.

The sensor 100 refers to, and is representative of one or more sensors, electrical sensing hardware, or processor or memory implemented operations for detecting and/or sensing and sending current status information, as non-limited examples, to the processor 300, as a non-limiting example. The sensor 100 may also sense or detect, as non-limiting examples, an electrical characteristic, an operating frequency, and a temperature of the processing device 200. The electrical characteristic may include a voltage that is applied to the processing device 200 and power consumption of the processing device 200.

The processing device 200 may perform an operation related to a neural network. In an example, the processing device 200 may be at least one processor. The processing device 200 may include, as non-limiting examples, a GPU, a neural processing unit (NPU), a field programmable gate array (FPGA), an application specific integrated circuit (ASIC), or an application processor (AP). In an example, the processing device 200 may be virtually implemented by the computing device 10 (or other electronic device) to execute instructions to configure a processor of same to implement any one, combination, of all operations and/or methods to provide a virtual processor device in a virtual machine.

The processor 300 may process data stored in the memory 400. The processor 300 may execute computer-readable instructions stored in the memory 400 and instructions induced by the processor 200.

The "processor 300" may be a data processing device implemented in hardware having a circuit having a physical structure for executing codes or instructions included in a program for operations

In an example, the data processing device implemented in hardware may include a microprocessor, a central processing unit, a processor core, a multi-core processor, and a multiprocessor, application-specific integrated circuit (ASIC), and field programmable gate array (FPGA).

The processor 300 may calculate a workload to be allocated to the at least one processing device 200 based on an operating mode corresponding to the at least one processing device 200, the electrical characteristic, the operating frequency, and the temperature.

The operating mode may include a high-performance mode and a high-efficiency mode. The high-performance mode may be a mode performing maximizing of an operation performance when performing an operation implementing the at least one processing device 200. The high efficiency mode may be a mode performing maximizing of a power efficiency when performing an operation implementing the at least one processing device 200.

In an example, the processor 300 may control the electrical characteristic, the operating frequency, and the temperature based on the operating mode and the workload.

When the operating mode is the high-performance mode, the processor 300 may allocate a workload with a relatively large number of computational operations to a processing device using a relatively small amount of power among the at least one processing device 200. In an example, the "large number of computational operations" may refer to a total number of computational operations that exceed a first threshold number of computational operations.

When the operating mode is the high-performance mode, the processor 300 may allocate a workload with a relatively small number of computational operations to the processing device 200 using a relatively large amount of power among the at least one processing device 200 and control the electrical characteristic and the operating frequency such that the processing device 200 using the relatively large amount of power has an electrical characteristic and an operating frequency corresponding to a peak efficiency. In an example, the "small number of computational operations" may refer to a total number of computational operations that is equal to or less than a second threshold number of computational operations, e.g., where the first and second threshold are equal to each other, or where the first threshold is greater than the second threshold.

When the operating mode is the high-efficiency mode, the processor 300 may allocate a relatively high workload to the processing device 200 to be driven with a relatively low voltage at a same operating frequency among the at least one processing device 200. When the operating mode is the high efficiency mode, the processor 300 may allocate a workload with a relatively large number of computational operations to a processing device having a highest power efficiency at the same operating frequency among the at least one processing device 200.

The processor 300 may control the operating frequency and an operating frequency of the memory 400 based on an arithmetic intensity (AI) of an operation to be performed in the at least one processing device 200.

In an example, the processor 300 may decrease the operating frequency of the memory 400 in response to the operating frequency of the processing device 200 being increased. In an example, the processor 300 may increase the operating frequency of the memory 400 in response to the operating frequency of the processing device 200 being decreased.

Additionally, in an example, the processor 300 may increase the operating frequency of the memory 400 in response to the operating frequency of the processing device 200 being increased, and may decrease the operating frequency of the memory 400 in response to the operating frequency of the processing device 200 being decreased.

The processor 300 may adjust the electrical characteristic and the operating frequency of the processing device 200 and the memory 400 based on at least a size and a shape of data input to the processing device 200. The processor 300 may perform reinforcement learning or training on the neural network using a reward that is determined based on the adjusted electrical characteristic and the adjusted operating frequency. The processor 300 may control the electrical characteristic and the operating frequency based on the neural network on which the reinforcement learning is performed.

The memory 400 may store data for an operation or an operation result. The memory 400 may store instructions to be executed by the processor. In an example, the instructions may include instructions to execute an operation of the processor 300 and/or an operation of each constituent element of the processor 300.

The memory 400 may be implemented as a volatile memory device or a non-volatile memory device.

The volatile or non-volatile memory device may be implemented as dynamic random access memory (DRAM), static random access memory (SRAM), thyristor RAM (T-RAM), zero capacitor RAM (Z-RAM), or twin transistor RAM (TTRAM).

The volatile or non-volatile memory may be implemented as electrically erasable programmable read-only memory (EEPROM), a flash memory, magnetic ram (MRAM), spintransfer torque (STT)-MRAM, conductive bridging RAM (CBRAM), ferroelectric RAM (FeRAM), phase change RAM (PRAM), resistive RAM (RRAM), nanotube RRAM, polymer RAM (PoRAM), nano floating gate memory (NFGM), a holographic memory, molecular electronic memory device, or insulator resistance change memory.

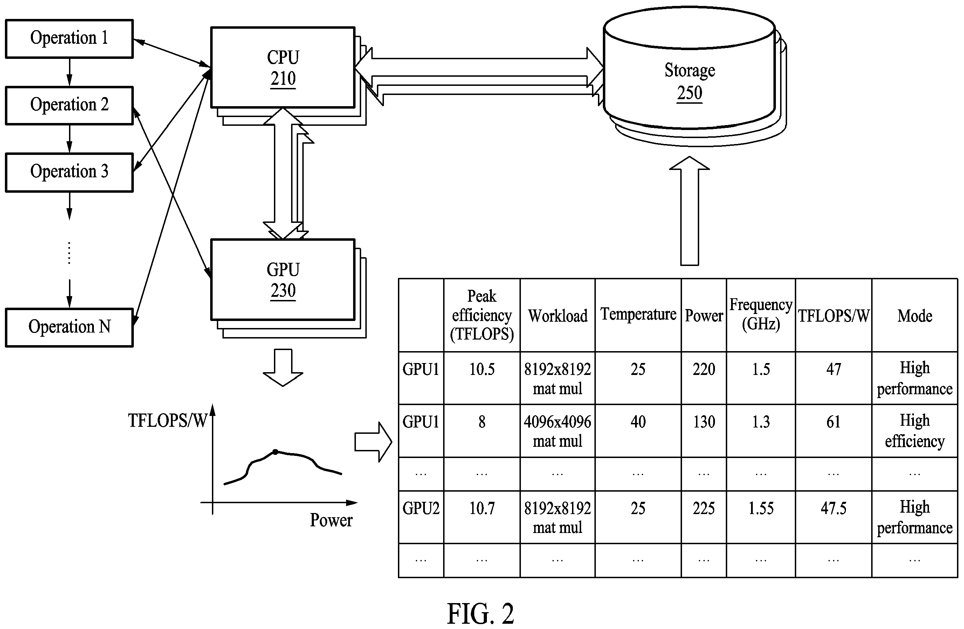

FIG. 2 illustrates an operation of the example computing device of FIG. 1. The computing device of FIG. 2 discussed below may be the computing device of FIG. 1, but ther examples are not limited thereto.

Referring to FIG. 2, the computing device 10 may control a voltage and a frequency by acquiring a performance of a processing device (e.g., the processing device 200 of FIG. 1) by utilizing a sensor (e.g., the sensor 100 of FIG. 1). The computing device may process a plurality of operations (e.g., operation 1, operation 2, ... operation N) using the at least one processing device 200.

In an example of FIG. 2, the processing device 200 may include a CPU 210 and a GPU 230. A storage 250 may be implemented as a memory (e.g., the memory 400 of FIG. 1).

A processor (e.g., the processor 300 of FIG. 1) may perform a micro-benchmark test on the plurality of operations, thereby acquiring a peak performance and a power efficiency according to a temperature of the processing device 200 while controlling the temperature, a voltage, an operating frequency, or a power value, as non-limiting examples. The processor 300 may store the acquired peak performance and power efficiency according to the temperature in the storage 250 in a form of a table (e.g., a table of FIG. 2), or dataframe of JavaScript object notation (json), csv, python, and the like. In an example, the peak performance may be represented by Tera FLoating point Operations Per Second (TFLOPS).

The processor 300 may achieve a target performance or target power efficiency of the entire computing system using the stored peak performance and power efficiency. The processor 300 may perform a test a plurality of times while controlling the temperature, the voltage, the operating frequency, or the power value. Accordingly, the processor 300 may acquire data, achieving results toward or at peak performance or peak efficiency.

Since the quality of the processing device 200 may vary, the processor 300 may previously acquire a difference in performance exhibited according to the voltage, and store the difference in the memory 400, thereby setting a determined optimized voltage or power level each time that the operating mode is changed.

In the high-efficiency mode which performs maximizing of the power efficiency, the processor 300 may previously acquire determined optimized voltages or power levels of the processing devices 200, and obtain a setting value to achieve a determined optimized power efficiency using a sum of performances and a sum of power consumptions of all processing devices.

The processor 300 may previously acquire voltages, operating frequencies, or power levels of the processing device 200 with respect to the power efficiency and divide a sum of performances obtained under conditions that the processing devices 200 exhibit determined optimized power efficiencies by a total sum of power, thereby searching for a setting condition to achieve the determined optimized power efficiency.

The processor 300 may verify whether a mean time between failure (MTBF), which indicates a range of normal operation of the processing devices 200, is reduced. When the MTBF is reduced, the processor 300 may determine whether the MTBF is less than a predicted operating time of a current workload. If the MTBF is shorter than an execution time of the workload, the processor 300 may increase the MTBF by adjusting the temperature or increasing the voltage.

If a condition or margin or determined optimized power efficiency point for optimized performance of the processing device 200 is changed due to an aging effect, the processor 300 may perform periodic tracking to prevent malfunctioning and may predict the aging effect to ensure normal operation. When results (e.g., performance or power efficiency) for operating conditions (e.g., temperature, voltage, operating frequency or power) of a portion of the processing devices 200 are changed due to the aging effect, the results may be predicted through regression and applied to all processing devices.

An input value of the regression may include a temperature, a voltage, an operating frequency, power, a size of an input, a shape of the input, a change in temperature, a change in result value for the voltage, a change in voltage for the temperature, a change in voltage for a frequency, or a time taken for a change, as non-limiting examples.

The processor 300 may generate conditions (e.g., setting conditions) for a unique voltage, operating frequency, or temperature of the processing device 200 into a table and store the generated table in the memory 400. The processor 300 may generate and store a separate table for each processing device. The processor 300 may store the table in a host storage, a main memory, a main memory in the processing device 200, and a flash memory, as non-limited examples.

The processor 300 may store a maximum time taken to identify an error occurrence according to the MTBF along with the setting condition. When a failure occurs due to the MTBF, the processor 300 may store a value indicating that the table for the setting condition under which the failure occurs is invalid, along with the corresponding setting condition.

The processor 300 may periodically verify and store relationships between the voltage, the operating frequency, the temperature, and the MTBF.

When the performance or power efficiency of the processing device 200 is changed due to the aging effect, the processor 300 may apply a changed setting condition to the processing device 200 by predicting a determined optimized setting condition through regression.

An input of regression analysis may include a temperature, a voltage, an operating frequency, power, a size of an input, a shape of the input, a change in temperature, a change in result value for the voltage, a change in voltage for the temperature, a change in voltage for the operating frequency, or a time taken for a change, as non-limiting examples.

The processor 300 may use the setting condition for the maximum performance and the maximum efficiency acquired from a chip or product on which the same processing device 200 is implemented, to search for a maximum performance and a maximum efficiency of another processing device 200. The processor 300 may search for the maximum performance and the maximum power efficiency while changing the voltage, the operating frequency, or the power based on a previously acquired setting condition at preset intervals.

Since a size of a workload allocated to the processing device 200 in applications such as High-Performance Linpack (HPL) may decrease over time, the processor 300 may previously know a size and a shape of a workload to be processed before an operation. The processor 300 may set a condition for a maximum performance mode suitable for the workload to be allocated by changing a setting condition for the voltage, the operating frequency, or the power, and then start an operation.

The processor 300 may calculate a workload to be allocated to the at least one processing device 200 based on the operating mode corresponding to the at least one processing device, an electrical characteristic, the operating frequency, and the temperature, as non-limiting examples. The operating mode may include the high-performance mode and the high-efficiency mode.

When the operating mode is the high-performance mode, the processor 300 may allocate a workload with a relatively large amount of computational operations to an processing device that uses a small amount of power among the at least one processing device 200. When the operating mode is the high-performance mode, the processor 300 may allocate a workload with a relatively small amount of computational operations to the processing device 200 that uses a relatively large amount of power among the at least one processing device 200 and control the electrical characteristic and the operating frequency such that the processing device 200 that uses the relatively large amount of power may have an electrical characteristic and an operating frequency corresponding to a peak efficiency.

When an unequal size of a workload is allocated to each of the processing devices 200 in an operation implementing two or more processing devices 200, the processor 300 may allocate a workload with a relatively large number of computational operations to the processing device 200 that uses a relatively small amount of power at the same frequency. The processor 300 may allocate a workload with a relatively small number of computational operations to the processing device 200 using a relatively large amount of power at the same frequency. Through the above-described workload allocating process, the processor 300 may set the voltage, operating frequency, or power that is closest to the setting that yields the peak efficiency without affecting overall computing performance, thereby achieving a determined optimized performance while reducing power consumption.

In an example, even when different types of processing devices 200 are driven together, such as the CPU 210 and the GPU 230, the processor 300 may set the voltage and operating frequency of the processing device 200 not critical to the performance to be close to a condition that performs maximizing of power efficiency.

The processor 300 may allocate a workload with a relatively large number of computational operations to the processing device 200 that may reduce the voltage or power at an operating frequency condition under which the processing device 200 performs maximizing of performance.

The processor 300 may perform maximizing of the power efficiency by lowering the voltage, operating frequency, or power of the processing device 200 that implements low computational workloads until the processing device 200 that implements the heavy computational workload completes the operation.

When performing an operation with different types of processing devices 200, the processor 300 may set the voltage, operating frequency, or power of the processing device, which does not affect the performance, to be as close as possible to the condition at which power efficiency of the processing device 200 is relatively high, thereby reducing the power consumption.

When the operating mode is the high-efficiency mode, the processor 300 may allocate a workload with a relatively large number of computational operations to the processing device 200 to be driven with a relatively low voltage at the same operating frequency among the at least one processing device 200. When the operating mode is the high-efficiency mode, the processor 300 may allocate a workload with a relatively small number of computational operations to an processing device having a highest power efficiency at the same operating frequency among the at least one processing device 200.

When an unequal size of a workload is allocated to each of the processing devices 200 in an operation implementing two or more processing devices 200, the processor 300 may allocate a workload with a relatively large number of computational operations to the processing device 200 that lowers the voltage further at the same frequency. In a range that does not affect computing performance, the processor 300 may reduce or increase an operating frequency of an processing device to which a workload with a relatively small number of computational operations is allocated. The processor 300 may control the operating frequency to be close to the condition at which the processing device 200 exhibits the highest power efficiency, thereby performing maximizing of a power efficiency of the entire computing system.

The processor 300 may use a characteristic table obtained from one processing device 200 to search for a characteristic of another processing device 200. The processor 300 may expand a search space based on a setting value for the high-performance mode or the high-efficiency mode of one processing device 200, thereby quickly finding determined optimized settings of another processing device 200 without searching the entire search space.

In an example, the processor 300 may perform a compute bound operation and a memory-bound operation. In an example of the memory-bound operation in which an arithmetic intensity (AI) or operational intensity (OI) of a performed workload is low, the processor 300 may reduce the operating frequency (e.g., clock frequency) of the processing device 200 and increase a clock frequency of the memory 400, thereby achieving a high performance. When a workload with high AI or OI performed is to be allocated, the processor 300 may increase the clock frequency of the processing device 200 and reduce the clock frequency of the memory 400, thereby increasing the power efficiency and achieving the high performance, simultaneously.

An algorithm to achieve the computing method of FIG. 2 may be implemented as software and stored in the host system, or implemented as separate hardware to operate without host intervention.

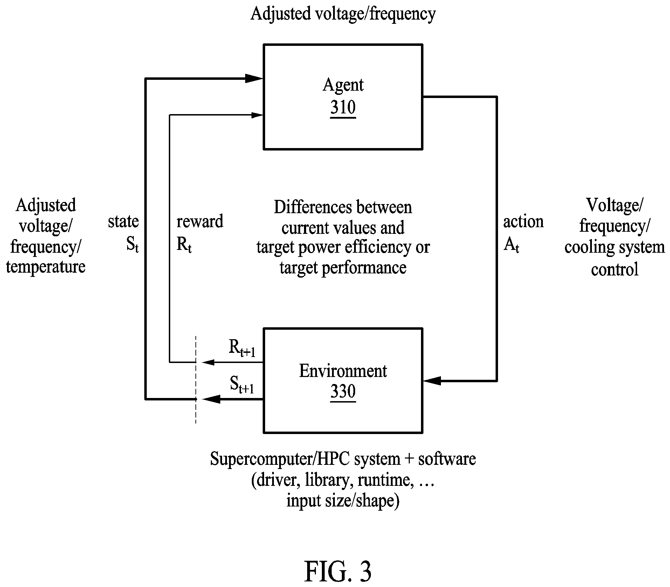

FIG. 3 illustrates an example reinforcement learning operation of the example computing device of FIG. 1.

Referring to FIG. 3, a processor (e.g., the processor 300 of FIG. 1) may derive and control determined optimized settings of processing devices (e.g., the processing device 200 of FIG. 1) by implementing reinforcement learning.

The processor 300 may adjust an electrical characteristic and an operating frequency based on a size and a shape of input data input to the at least one processing device 200 and perform reinforcement learning on a neural network using a reward determined based on the adjusted electrical characteristic and the adjusted operating frequency. The processor 300 may control the electrical characteristic and the operating frequency based on the neural network on which the reinforcement learning is performed.

If the number of the processing devices 200 increases, testing for all examples may be difficult. Thus, the processor 300 may retain data sensed or detected while changing various conditions (e.g., data size, data shape, temperature, voltage, operating frequency, or power) along with unique manufacturing year and manufacturer information of the processing device 200 by the method described with reference to FIG. 2.

The processor 300 may use various conditions (e.g., data size, data shape, temperature, voltage, operating frequency, or power) as input values along with the unique manufacturing year and the manufacturer information, and may set a setting value of each of the processing devices 200 for an operating mode (e.g., high performance mode or high efficiency mode) as a target value. Accordingly, the processor 300 may derive a setting value to control the processing device 200 even for a condition at which a test is not performed by implementing a machine learning regression model.

The processor 300 may control a voltage and an operating frequency of the processing device 200 while automatically acquiring a characteristic of the processing device 200 through the reinforcement learning. As described with reference to FIG. 2, the processor 300 may search for a voltage, an operating frequency, and an electrical characteristic while adjusting a temperature based on a limit allowed by a chip on which the computing device 10 is implemented using the predetermined number of processing devices 200. When performing an operation using the predetermined number of processing devices 200 or more, the processor 300 may search for settings corresponding to the high-performance mode and the high-efficiency mode by implementing the reinforcement learning for a portion of the processing devices and apply found settings to other processing devices 200, thereby performing a determined optimized operation without performing excessive tests.

When the workload is executed in the high-performance mode, the size and shape of the input data allocated to each of the processing devices 200 may change over time. When the workload is executed, the processor 300 may perform reinforcement learning by setting a maximum operating frequency to perform maximizing of performance, attempting at reducing power, and if power reduction is successful, giving a high reward. The processor 300 may teach the agent not to fall into the setting that exceeds an acceptable range by giving a lowest reward for a setting condition that exceeds the acceptable range.

The processor 300 may give a reciprocal of a difference between the determined optimized condition and a current set condition as a reward. The processor 300 may set a reward at a point at which a voltage or power is lowest at a maximum operating frequency condition as a maximum reward and give, for a condition that a difference from a setting condition corresponding to the maximum reward increases, a reward in proportion to the difference.

When the workload is executed in the high efficiency mode, the size and shape of the input data allocated to each of the processing devices 200 may change over time. The processor 300 may perform the reinforcement learning in a manner that gives a reward to increase a power efficiency value (e.g., TFLOPS/W) by adjusting the voltage and the operating frequency such that the power efficiency is maximized.

The processor 300 may use data sensed or detected while changing a plurality of setting conditions (e.g., data size, data shape, temperature, voltage operating frequency, or power, as only examples) along with a unique manufacturing year and manufacturer information of the processing device 200 as input values. The processor 300 may set a setting condition for each operating mode of the processing device 200 to be a target value, thereby predicting a suitable setting condition even for a situation in which a test is not performed using a machine learning regression model.

The processor 300 may control the voltage or operating frequency while automatically acquiring the characteristic of the processing device 200 through the reinforcement learning.

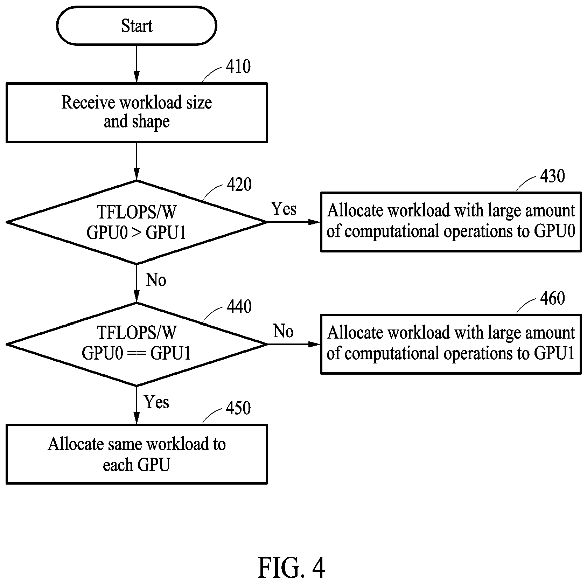

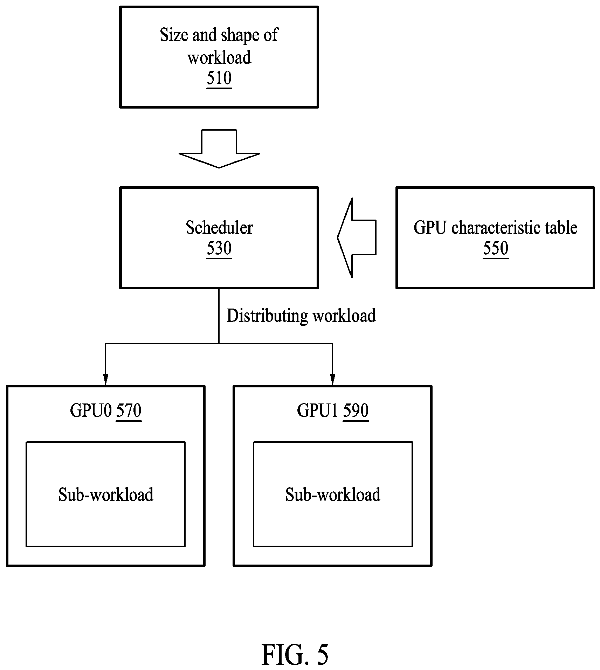

FIG. 4 is a flowchart illustrating an example operation of allocating different sizes of workload according to power efficiency, and FIG. 5 illustrates an example scheduler that allocates different sizes of workload according to power efficiency.

Referring to FIGS. 4 and 5, a scheduler 530 may receive information 510 on a workload to be allocated to an processing device (e.g., the processing device 200 of FIG. 1). The information on the workload may include a size and a shape of the workload. In an example, the scheduler 530 may be implemented in a processor (e.g., the processor 300 of FIG. 1). The scheduler 530 may be implemented as hardware or software.

The scheduler 530 may allocate a workload with a relatively large number of computational operations to the processing device 200 having a greater performance in the high-performance mode and allocate a workload with a relatively large number of computational operations to an processing device having a higher power efficiency in the high efficiency mode.

The processing device 200 may include a GPUO 570 and a GPU1 590. Although FIGS. 4 and 5 illustrate the processing device 200 as a GPU, this is only an example, and the processing device 200 may also be implemented as a CPU, an NPU, an FPGA, or a DSP, as only examples.

The scheduler 530 may distribute a workload to the GPUO 570 and the GPU1 590 based on a GPU characteristic table. The scheduler 530 may allocate a sub-workload to the GPUO 570 and the GPU1 590.

In operation 410, the scheduler 530 may receive information on a workload. The scheduler 530 may compare power efficiencies (e.g., TFLOPS/W) of the at least one processing device 200. In operation 420, the scheduler 530 may determine whether a power efficiency of the GPUO 570 is higher than a power efficiency of the GPU1 590. When the power efficiency of the GPUO 570 is higher, in operation 430, the scheduler 530 may allocate a workload with a larger number of computational operations to the GPUO 570.

When the power efficiency of the GPUO 570 is not higher than the power efficiency of the GPU1 590, in operation 440, the scheduler 530 may determine whether the power efficiency of the GPUO 570 is equal to the power efficiency of the GPU 1 590.

When the power efficiency of the GPUO 570 is equal to the power efficiency of the GPU1 590, the scheduler 530 may allocate the same workload to each GPU. When the power efficiency of the GPUO 570 is unequal to the power efficiency of the GPU1 590, the scheduler 530 may allocate a workload with a larger number of computational operations to the GPU1 590.

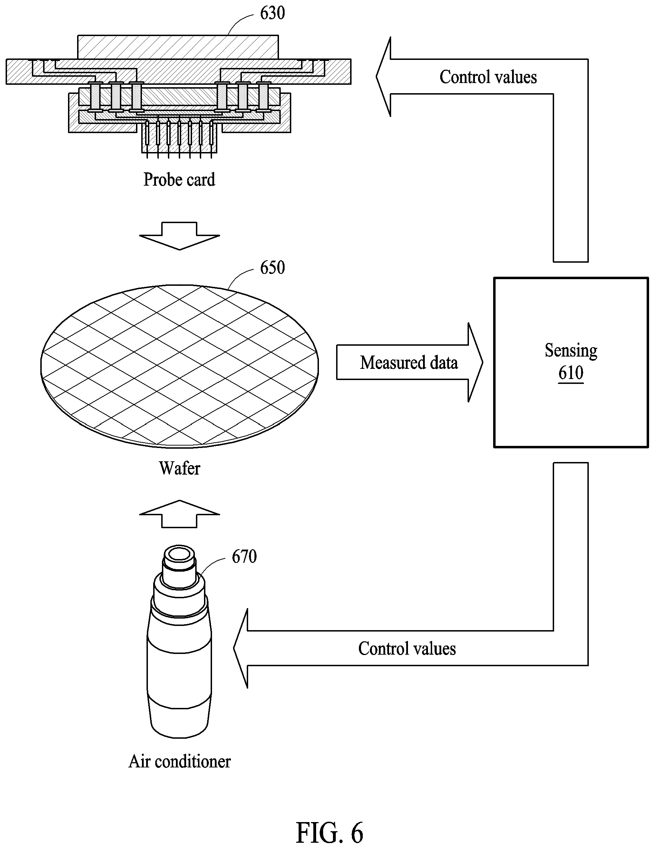

FIG. 6 illustrates an example operation of searching for determined optimized settings by the example computing device of FIG. 1.

Referring to FIG. 6, the example computing device 10 may be implemented in a sensing system 610. In a non-limited example, the sensing system 610 may perform a test on the processing device 200 when the processing device 200 is mass-produced in a form of a chip. By implementing a probe card 630, the sensing system 610 may heat or cool a chip in a form of a wafer 650 using an air conditioner 670 (e.g., heater or cooler), input a test model, and search for determined optimized settings.

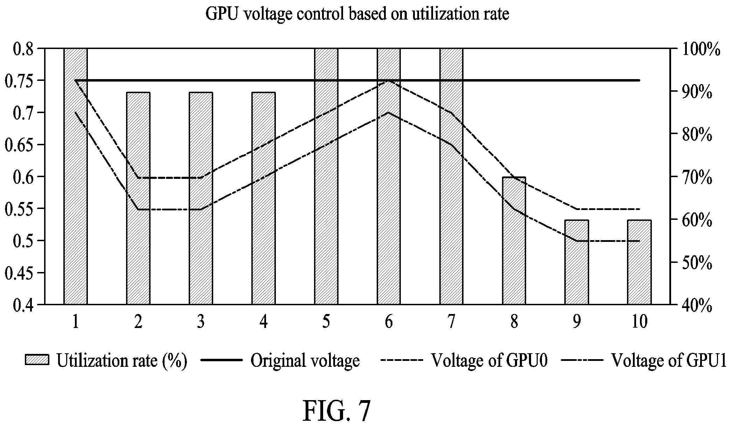

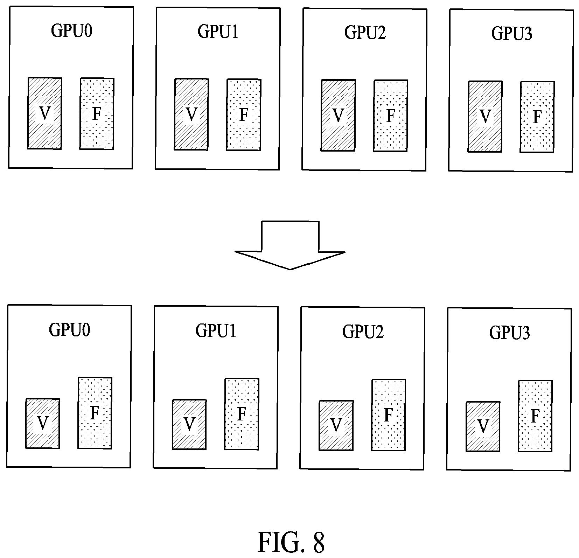

FIG. 7 illustrates a difference in GPU voltage change according to a GPU utilization rate, and FIG. 8 illustrates an operation performed to achieve a maximum frequency using a different voltage for each GPU in a maximum performance mode.

Referring to FIGS. 7 and 8, chips on which processing devices (e.g., the processing device 200 of FIG. 1) are implemented may have available ranges of a unique voltage and an operating frequency according to a temperature, which are derived in a manufacturing process. The chips may include a chip that reduces power consumption while achieving the maximum performance by adjusting a voltage or an operating frequency, and a chip that performs maximizing of the power efficiency while achieving the same performance.

In an example of FIG. 8, using such differences of the chips, the processor 300 may reduce the power consumption while achieving the maximum performance or achieve the maximum power efficiency by storing a unique characteristic for each of the processing devices 200 instead of uniformly applying a setting condition of the processing device 200. The processor 300 may achieve the maximum performance or the maximum efficiency of a computing system by implementing an automated method such as reinforcement learning.

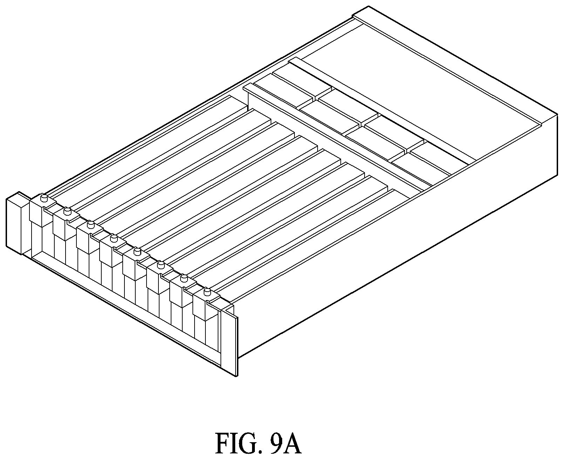

FIGS. 9A through 9C illustrate examples of applications of the computing device of FIG. 1.

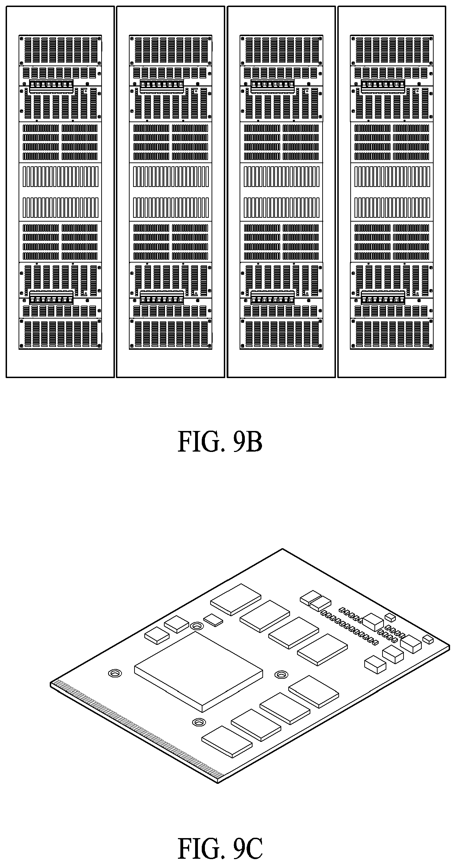

Referring to FIGS. 9A through 9C, a computing device (e.g., the computing device 10 of FIG. 1) may be implemented on a hardware device in various ways. In the example of FIG. 9A, the computing device 10 may be implemented on a GPU server. In the example of FIG. 9B, the computing device 10 may be implemented on a rack scale server system. In the example of FIG. 9C, the computing device 10 may be implemented on a system in which a mobile GPU is embedded.

In a non-limited example, the computing device 10 may be applied to a system including an processing device (e.g., the processing device 200 of FIG. 1) such as Internet of Thing (IoT), an autonomous system, a GPU server, an HPC, cloud, and a supercomputer, and the like to achieve a maximum performance while reducing power consumption.

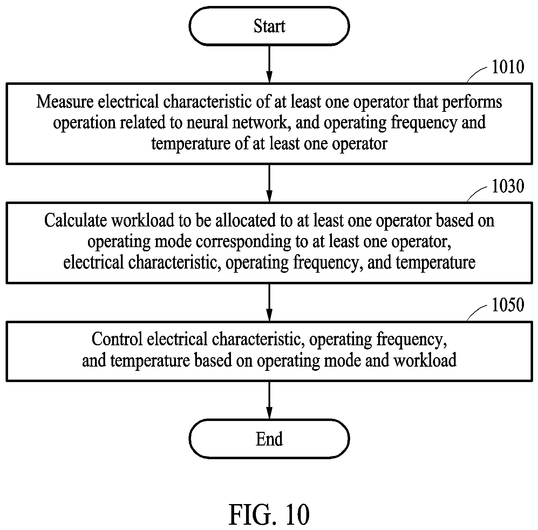

FIG. 10 is a flowchart illustrating an example operation of the computing device of FIG. 1, in accordance with one or more embodiments. The operations in FIG. 10 may be performed in the sequence and manner as shown. However, the order of some operations may be changed, or some of the operations may be omitted, without departing from the scope of the shown example. Additionally, operations illustrated in FIG. 10 may be performed in parallel or simultaneously. One or more blocks of FIG. 10, and combinations of the blocks, can be implemented by special purpose hardware-based computer that perform the specified functions, or combinations of special purpose hardware and instructions, e.g., computer or processor instructions. In addition to the description of FIG. 10 below, the descriptions of FIGS. 1-9C are also applicable to FIG. 10, and are incorporated herein by reference. Thus, the above description may not be repeated here for brevity purposes. The operations of FIG. 10 may be performed by a processor of the electronic device.

Referring to FIG. 10, in operation 1010, a sensor (e.g., the sensor 100 of FIG. 1) may sense or detect an electrical characteristic of at least one processing device (e.g., the processing device 200 of FIG. 1) that performs an operation related to a neural network, and an operating frequency and a temperature of the at least one processing device 200.

In operation 1030, the processor 300 may calculate a workload to be allocated to the at least one processing device 200 based on an operating mode corresponding to the at least one processing device 200, the electrical characteristic, the operating frequency, and the temperature of the at least one processing device 200.

The operating mode may include a high-performance mode and a high-efficiency mode. The high-performance mode may indicate a mode performs maximizing of an operation performance when performing an operation using the at least one processing device 200. The high-efficiency mode may indicate a mode performs maximizing of a power efficiency when performing an operation using the at least one processing device 200.

In operation 1050, the processor 300 may control the electrical characteristic, the operating frequency, and the temperature based on the operating mode and the workload.

When the operating mode is the high-performance mode, the processor 300 may allocate a workload with a relatively large number of computational operations to an processing device that uses a relatively small amount of power among the at least one processing device 200. When the operating mode is the high-performance mode, the processor 300 may allocate a workload with a relatively small number of computational operations to the processing device 200 that uses a relatively large amount of power among the at least one processing device 200, and may control the electrical characteristic and the operating frequency such that the processing device 200 that uses the relatively large amount of power has an electrical characteristic and an operating frequency corresponding to a peak efficiency.

When the operating mode is the high-efficiency mode, the processor 300 may allocate a workload with a relatively large number of computational operations to the processing device 200 to be driven with a relatively low voltage at a same operating frequency among the at least one processing device 200. When the operating mode is the high-efficiency mode, the processor 300 may allocate a workload with a relatively large number of computational operations to a processing device having a highest power efficiency at the same operating frequency among the at least one processing device 200.

The processor 300 may control the operating frequency and an operating frequency of the memory 400 based on an AI of an operation to be performed in the at least one processing device 200.

When the operating frequency of the processing device 200 is increased, the processor 300 may decrease the operating frequency of the memory 400. When the operating frequency of the processing device 200 is decreased, the processor 300 may increase the operating frequency of the memory 400.

To achieve the maximum performance, the processing device 200 may increase the frequency of the processing device 200 along with the frequency of the memory 400. Additionally, to achieve the maximum power efficiency, the processing device may decrease the frequency of the processing device 200 along with the frequency of the memory 400.

The processor 300 may adjust the electrical characteristic and the operating frequency based on a size and a shape of input data that is input to the processing device 200. The processor 300 may perform reinforcement learning or training on the neural network using a reward that is determined based on the adjusted electrical characteristic and the adjusted operating frequency. The processor 300 may control the electrical characteristic and the operating frequency based on the neural network on which the reinforcement learning is performed.

The computing device 10, sensor 100, processing device 200, processor 300, memory 400, and other devices, and other components described herein are implemented as, and by, hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a fieldprogrammable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods that perform the operations described in this application, and illustrated in FIGS. 1-10, are performed by computing hardware, for example, by one or more processors or computers, implemented as described above executing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller, e.g., as respective operations of processor implemented methods. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that be performed by the hardware components and the methods as described above. In one example, the instructions or software include machine code that is directly executed by the one or more processors or computers, such as machine code produced by a compiler. In another example, the instructions or software include higher-level code that is executed by the one or more processors or computers using an interpreter. The instructions or software may be written using any programming language based on the block diagrams and the flow charts illustrated in the drawings and the corresponding descriptions in the specification, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access programmable read only memory (PROM), EEPROM, RAM, DRAM, SRAM, flash memory, non-volatile memory, CD-ROMs, CD-Rs, CD+Rs, CD-RWs, CD+RWs, DVD-ROMs, DVD-Rs, DVD+Rs, DVD-RWs, DVD+RWs, DVD-RAMs, BD-ROMs, BD-Rs, BD-R LTHs, BD-REs, blueray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors and computers so that the one or more processors and computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent to one of ordinary skill in the art, after an understanding of the disclosure of this application, that various changes in form and details may be made in these examples without departing from the scope of the claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, the scope of the disclosure is defined, not by the detailed description, but by the claims, and all variations within the scope of the claims are to be construed as being included in the disclosure.

## Claims

1. A computing device, comprising:
at least one processing device configured to perform an operation of a neural network;
a sensor configured to sense at least one of an electrical characteristic of the at least one processing device, an operating frequency of the at least one processing device, and a temperature of the at least one processing device; and
a processor configured to calculate a workload to be allocated to the at least one processing device based on an operating mode of the at least one processing device, the sensed electrical characteristic of the at least one processing device, the sensed operating frequency of the at least one processing device, and the sensed temperature of the at least one processing device, and control the electrical characteristic, the operating frequency, and the temperature based on the operating mode and the calculated workload.

2. The device of claim 1, wherein the sensor comprises an element configured to measure the electrical characteristics, and wherein the electrical characteristic comprises at least one of a voltage applied to the at least one processing device and power consumption of the at least one processing device;
preferably wherein the sensor comprises a temperature sensor configured to measure the temperature.

3. The device of any of the foregoing claims, wherein, the processor is configured to, in response to the operating mode being a high-performance mode, allocate a workload with a large number of computational operations to a processing device among the at least one processing device that uses a small amount of power.

4. The device of any of the foregoing claims 1-2, wherein, the processor is configured to, in response to the operating mode being a high-performance mode
allocate a workload with a small number of computational operations to a processing device among the at least one processing device that uses a large amount of power; and
control the electrical characteristic and the operating frequency such that the processing device that uses the large amount of power has an electrical characteristic and an operating frequency that corresponds to a peak efficiency.

5. The device of any of the foregoing claims, wherein, the processor is configured to, in response to the operating mode being a high-efficiency mode, allocate a workload with a large number of computational operations to a processing device among the at least one processing device to be driven with a low voltage at a same operating frequency.

6. The device of any of the foregoing claims, wherein the processor is configured to control the operating frequency of the at least one processing device and an operating frequency of a memory based on an arithmetic intensity, AI, of an operation to be performed in the at least one processing device;
preferably wherein the processor is configured to
increase the operating frequency of the memory in response to the operating frequency of a first processing device of the at least one processing device being increased, and decrease the operating frequency of the memory in response to the operating frequency of the first processing device of the at least one processing device being decreased; and/or to
decrease the operating frequency of the memory in response to the operating frequency of a second processing device of the at least one processing device being increased, and increase the operating frequency of the memory in response to the operating frequency of the second processing device of the at least one processing device being decreased.

7. The device of any of the previous claims, wherein the processor is configured to:
adjust the sensed electrical characteristic of the at least one processing device and the sensed operating frequency of the at least one processing device based on at least one of a size and a shape of input data input to the at least one processing device;
perform reinforcement learning on the neural network using a reward determined based on the adjusted electrical characteristic and the adjusted operating frequency; and
control the adjusted electrical characteristic and the adjusted operating frequency based on the neural network on which the reinforcement learning is performed.

8. A processor-implemented method, the method comprising:
measuring an electrical characteristic of at least one processing device, an operating frequency of the at least one processing device, and a temperature of the at least one processing device, wherein the at least one processing device is configured to perform an operation related to a neural network;
calculating a workload to be allocated to the at least one processing device based on an operating mode of the at least one processing device, the sensed electrical characteristic of the at least one processing device, the sensed operating frequency of the at least one processing device, and the sensed temperature of the at least one processing device; and
controlling the electrical characteristic, the operating frequency, and the temperature based on the operating mode and the calculated workload,
wherein the measuring, the calculating and the controlling are performed by a processor configured according to instructions executed by the processor.

9. The method of claim 8, wherein the electrical characteristic comprises at least one of a voltage applied to the at least one processing device and power consumption of the at least one processing device.

10. The method of any of claims 8-9, wherein the operating mode comprises a high-performance mode; and
wherein the calculating of the workload by the processor comprises, in response to the operating mode being the high-performance mode, allocating, by the processor, a workload with a large number of computational operations to an processing device among the at least one processing device that uses a small amount of power.

11. The method of any of claims 8-9, wherein the operating mode comprises a high-performance mode; and
wherein the calculating of the workload by the processor comprises:
in response to the operating mode being the high-performance mode, allocating, by the processor, a workload with a small number of computational operations to a processing device among the at least one processing device that uses a large amount of power; and
controlling, by the processor, the electrical characteristic and the operating frequency such that the processing device that uses the large amount of power has an electrical characteristic and an operating frequency that corresponds to a peak efficiency.

12. The method of any of claims 8-11, wherein the operating mode comprises a high-efficiency mode; and
wherein the calculating of the workload by the processor comprises allocating, in response to the operating mode being the high-efficiency mode, a workload with a large number of computational operations to a processing device among the at least one processing device to be driven with a low voltage at a same operating frequency.

13. The method of any of claims 8-12, further comprising:
controlling, by the processor, the operating frequency of the at least one processing device and an operating frequency of a memory based on an arithmetic intensity, AI, of an operation to be performed in the at least one processing device.

14. The method of claim 13, wherein the controlling of the operating frequency of the at least one processing device and the operating frequency of the memory comprises:
increasing the operating frequency of the memory in response to the operating frequency of a first processing device of the at least one processing device being increased and decreasing the operating frequency of the memory in response to the operating frequency of the first processing device of the at least one processing device being decreased;
and/or wherein the controlling of the operating frequency of the at least one processing device and the operating frequency of the memory comprises:
decreasing the operating frequency of the memory in response to the operating frequency of a second processing device of the at least one processing device being increased and increasing the operating frequency of the memory in response to the operating frequency of the second processing device of the at least one processing device being decreased.

15. The method of any of claims 8-14, further comprising:
adjusting the sensed electrical characteristic of the at least one processing device and the sensed operating frequency of the at least one processing device based on at least one of a size and a shape of input data input to the processing device;
performing reinforcement learning on the neural network using a reward determined based on the adjusted electrical characteristic and the adjusted operating frequency; and
controlling the adjusted electrical characteristic and the adjusted operating frequency based on the neural network on which the reinforcement learning is performed.
